# EUROPEAN PATENT SPECIFICATION

(11) **EP 3 887 058 B1**
(45) Date of publication and mention of the grant of the patent: **25.10.2023**
(21) Application number: 19827965.5
(22) Date of filing: 27.11.2019
(51) Int. Cl.: B05B 5/03, B05B 5/043, B05B 7/06, B05B 7/04, B05B 7/08, F26B 3/12

(54) **ELECTROSTATIC SPRAY DRYING NOZZLE ASSEMBLY**
ELEKTROSTATISCHE SPRÜHTROCKNUNGSDÜSENANORDNUNG
DISPOSITIF DE BUSE DE SÉCHAGE PAR PULVÉRISATION ÉLECTROSTATIQUE

(30) Priority: 30.11.2018 US 201862773875 P
(43) Date of publication of application: 06.10.2021
(60) Divisional application: 23196389.3
(73) Proprietor: Spraying Systems Co., Wheaton, IL 60187-7901 (US)
(72) Inventor: ACKERMAN, Thomas, Francestown, New Hampshire 03043 (US); WEE SIT, Lyndon, Hudson, New Hampshire 03051 (US); WEINSTEIN, Donald, Nashua, New Hampshire 03063 (US); HUFFMAN, Dave, Merrimack, New Hampshire 03054 (US)
(74) Representative: Barker Brettell LLP
(86) International application number: PCT/US2019/063739
(87) International publication number: WO 2020/113093

(56) References cited:
- FR-A- 1 460 927
- US-A- 3 790 086
- US-A- 4 545 536
- US-A1- 2017 120 267

## Description

### CROSS-REFERENCE TO RELATED APPLICATION

This patent application claims the benefit of U.S. Patent Application No. 62/773,875 filed November 30, 2018.

### FIELD OF THE INVENTION

The present invention relates generally to liquid spray nozzle assemblies, and more particularly, to electrostatic spray nozzle assemblies particularly adapted for spray drying liquids by electrostatically charging fluids to facilitate fine liquid particle breakdown and distribution.

### BACKGROUND OF THE INVENTION

In the spray drying industry, electrostatic spray nozzle assemblies are now being used to improve drying efficiency and product quality. While it is desirable to utilize internal components made from non-metallic material, the solvents used in many spray drying applications attack and degrade such materials. Hence, it is necessary that the spray dryer apparatus be designed to ensure that solvents in their liquid state do not come in contact with such degradable plastic components. Typically electrostatic spray dryers have utilized external mix spray nozzle assemblies in which the liquid feed and atomizing gas interact outside the nozzle.

External mix spray nozzles, however, operate at very low liquid flow rates, such as less than 10 kg/hr of feed stock. Such low flow nozzles produce a very fine droplet with at an easily controllable low pressure. To increase the flow rate, however, it is necessary to increase the diameter of the liquid discharge orifice of the nozzle. As the liquid discharge orifice is increased in diameter to reach the higher flow rates, however, the droplet sizes of the spray will also increase. If the droplet size is too large, it will not dry adequately in the dryer chamber even when electrostatically charged. Liquid droplets that are not adequately dried further can coat internal components of the sprayer, impeding optimum operation and requiring cleaning and/or replacement. Larger spray nozzle discharge orifices further result in discharging sprays with greater velocities and momentum. In spray drying applications, this requires longer length and more expensive drying chambers to accommodate such discharging sprays. In order to increase spraying capacity while maintaining optimum liquid atomization at low flow rates, it has been necessary to use a multiplicity of electrostatic sprayers, with multiple nozzle bodies, feed lines, compressed gas lines, pumps, and high voltage cables, which is costly and can be cumbersome to install and use.

Internal mix spray nozzle assemblies are known that have the benefit of multistage liquid breakup in atomization which allows the spray nozzle to produce very fine liquid particle discharges. Internal mix spray nozzles, however, operate at higher liquid pressures, which can preclude the use of low pressure operating peristaltic pumps particularly preferred for spray drying in the pharma and flavor industries. Internal mix spray nozzles further utilize considerably smaller amounts of compressed atomizing gases, which can be advantageous when atomizing with non-air gases, such as hydrogen which are desirable in various spray drying applications. FR1460927 discloses an electrostatic paint gun having a nozzle assembly having the features of the preamble of claim 1 of the appended claims.

### OBJECTS AND SUMMARY OF THE INVENTION

In accordance with the invention there is provided an electrostatic sprayer in accordance with claim 1 of the appended claim set.

It is an object of the present invention to provide an electrostatic sprayer having an electrostatic spray nozzle assembly that can generate a controllable fine liquid droplet spray with relatively high flow rates particularly advantageous in spray drying applications.

Another object is to provide an external mix electrostatic spray nozzle assembly as characterized above that can be operated at relatively high flow rates in spray dryers having shorter and more compact drying chambers.

A further object is to provide an electrostatic spray nozzle assembly of the forgoing type in which internal degradable plastic or other non-metallic components of the spray nozzle assembly are isolated from sprayed liquid.

Yet another object is to provide an electrostatic sprayer having a spray nozzle assembly of the above kind that can be operated at relatively low pressures, and hence can economically utilize low pressure peristaltic pumps.

Still a further object is to provide an electrostatic spray nozzle assembly of the above kind that has an internal mix spray nozzle for more efficiently producing a controllable fine liquid droplets at lower atomizing gas flow rates particularly advantageous in spray drying.

Yet another object is to provide an electrostatic spray nozzle assembly for use in spray drying that is relatively simple in construction and lends itself to economical manufacture.

Other objects and advantages of the invention will become apparent upon reading the following detailed description and upon reference to the drawings, in which:

### BRIEF DESCRIPTION OF THE DRAWINGS

Figure 1 is a longitudinal section of an illustrative electrostatic sprayer having an external mix spray nozzle assembly in accordance with the invention;
Fig. 2 is an enlarged fragmentary section of the external mix spray nozzle assembly of the electrostatic sprayer shown in Fig. 1;
Fig. 3 is an enlarged fragmentary section of one of the spray tip assemblies of the spray nozzle assembly shown in Fig. 2;
Fig. 4 is an exploded view of the spray nozzle assembly shown in Figs. 1 and 2;
Fig. 5 is a longitudinal section depicting the assembly of the spray nozzle assembly in the electrostatic sprayer shown in Fig. 1;
Fig. 6 is a longitudinal section of an alternative electrostatic sprayer not according to the claimed invention; in this case having an internal mix spray nozzle assembly;
Fig. 7 is an enlarged fragmentary section of the spray nozzle assembly of the sprayer shown in Fig. 6;
Fig. 8 is a longitudinal section similar to Fig. 6, but showing components of the sprayer being assembled;
Fig. 9 is an exploded view of the internal mix spray nozzle assembly of the electrostatic sprayer shown in Fig. 6; and
Fig. 10 is an enlarged fragmentary perspective, partially in section, showing the discharge end of the electrostatic sprayer shown in Fig. 6.

While the invention is susceptible of various modifications and alternative constructions, certain illustrative embodiments thereof have been shown in the drawings and will be described below in detail. It should be understood, however, that there is no intention to limit the invention to the specific forms disclosed, but on the contrary, the intention is to cover all modifications and alternative constructions falling within the scope of the invention as defined by the appended claims.

### DETAILED DESCRIPTION OF PREFERRED EMBODIMENTS

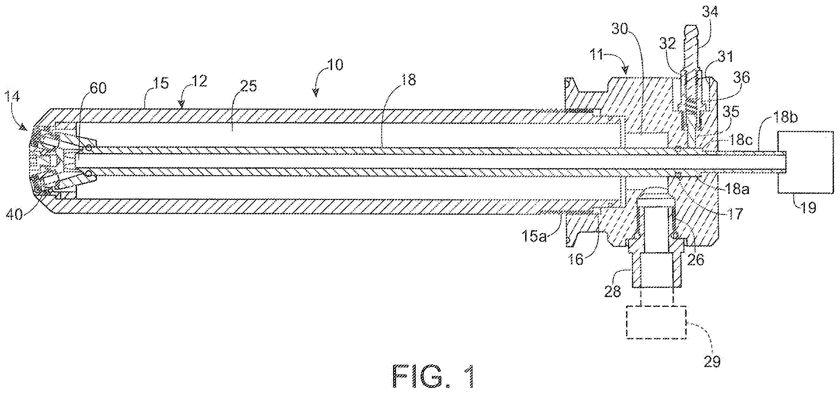

Referring now more particularly to Fig. 1 of the drawings, there is shown an illustrative electrostatic sprayer 10 in accordance with the invention. The illustrated electrostatic sprayer 10 includes a fluid and high voltage input head 11, an elongated nozzle barrel or body 12 extending downstream from the input head 11, and a discharge spray nozzle assembly 14 at a downstream end of the elongated nozzle body 12. It will be understood that the electrostatic sprayer 10 may be used in spray drying systems, such as the spray drying systems disclosed in U.S. application no. 15/342,710 filed November 3, 2016 assigned to the same assignee as the present application. The nozzle body 12 may be relatively long in length in relation to its diameter for enabling mounting of the sprayer 10 in a wall of a processing vessel or the like with the discharge spray nozzle assembly 14 within the vessel and the input head 11 remotely located outside the vessel. The input head 11 and nozzle body 12 preferably are made of a hard plastic or other electrically non-conductive material, such as thermoplastic polyetherimide (PEI) sold under the tradename Ultem1000, which can be machined into final form. In practice, the elongated nozzle body 12 may have a length of 10 times or more the diameter of the nozzle body 12, up to 30,48 m (12 inches) or more.

The input head 11 is cylindrical in form and the elongated body 12 is a cylindrical body member 15 having an upstream end threadably engaged within a threaded bore of the input head11 with a sealing O-ring 16 interposed between the cylindrical body member 15 and input head 11. A liquid feed tube 18 made of stainless steel or other electrically conductive material extends axially through the outer cylindrical body member 15 with an upstream end 18a supported within and extending outwardly thereof for coupling to pressurized liquid supply 19. The liquid feed tube 18 in this instance has a reduced diameter upstream end section 18b that defines a locating shoulder 18c mountable within a counterbore of the input head 11. A sealing O-ring 17 is interposed between the liquid feed tube 18 and the input head 11.

The liquid feed tube 18 extends axially through the cylindrical body member 15 for defining an annular atomizing gas passage 25 between a liquid feed tube 18 and the outer cylindrical body member 15. The input head 11 is formed with a radial pressurized gas inlet passage 26 that receives with a gas inlet filling 28 coupled to a suitable pressurized gas supply 29. The gas inlet passage 26 communicates with an annular gas chamber 30 surrounding the liquid feed tube 18 within the input head 11, which in turn communicates with the annular atomizing gas passage 25 through the cylindrical body member 15.

For electrically charging liquid directed into and through the liquid feed tube 18, the input head 11 further has a radial passage 31, in this case upstream of the gas inlet passage 26, that receives a fitting 32 secured to a high voltage cable 34 connected to a high voltage source. The high voltage cable 34 in this instance has a terminal abutment segment 35 biased by a spring 36 into reliable electrically conducting relation with the liquid feed tube 18. With the liquid feed tube 18 electrically charged by the high voltage cable 34 it can be seen that feed liquid through the feed tube 18 is charged along its entire length of travel to the spray nozzle assembly 14. At the same time, pressurized gas is communicated through the annular gas passage 25 between the liquid feed tube 18 and outer cylindrical body member 15.

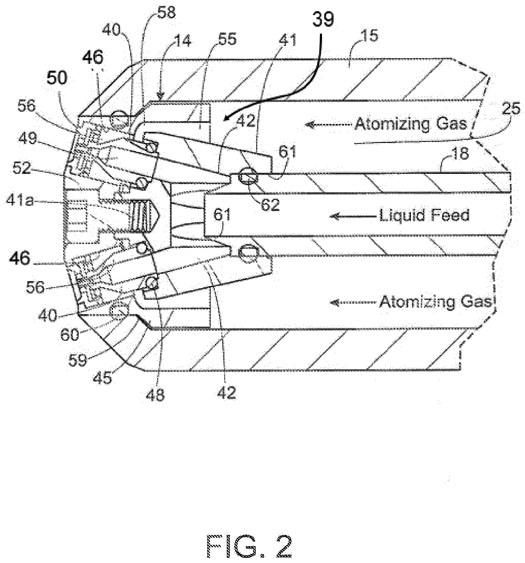

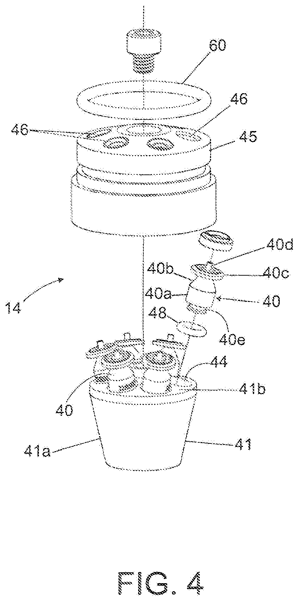

In accordance with this embodiment of the invention, the spray nozzle assembly 14 is an external mix spray nozzle assembly operable for producing a fine liquid particle spray, particularly suitable for spray drying applications, at relatively high liquid flow rates and low pressures for optimum and economical spray drying operation. To this end, the spray nozzle assembly 14 has a cluster head design comprising a plurality of individual spray tips 40 coupled to common pressurized liquid and gas supplies, in this case, from the liquid feed tube 18 and the annular pressurized gas passage 25, respectively. The illustrated cluster head spray nozzle assembly 14, as best depicted in Figs. 2-4, has a cluster head body 39 that comprises a nozzle liquid manifold 41 and a nozzle cap 45. The nozzle liquid manifold 41 is formed with a plurality of outwardly angled liquid passages 42 each communicating between the common liquid feed tube 18 and a plurality of respective downstream spray tip receiving openings 44 within which a respective spray tip 40 is mounted and retained (Figs. 2 and 4). The nozzle cap 45 mounted on a downstream end of the nozzle liquid manifold 41 has a plurality of circumferentially spaced cylindrical openings 46 aligned with the spray tips 40. The nozzle liquid manifold 41 in this instance has a frustoconical upstream end 41a expanding outwardly in a downstream direction and an outwardly curved downstream end 41b through which the spray tip receiving openings 44 extend in a downstream direction at a small angle, such as between about 12-15 degrees, outwardly with respect to a central axis of the nozzle liquid manifold 41 and cylindrical body member 15.

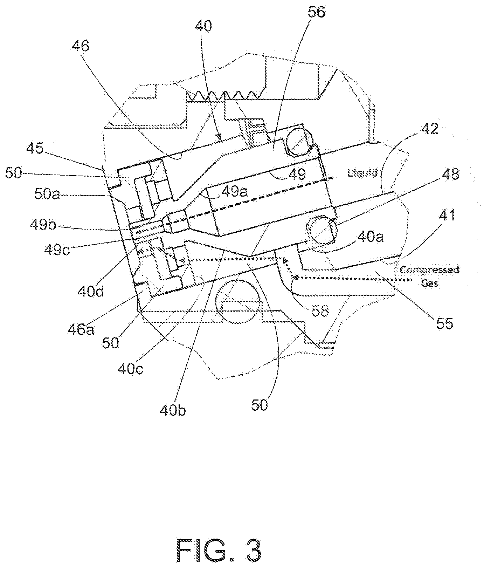

In carrying out this embodiment, the spray tips 40 each are made of an electrically conductive metal and in this case have an upstream cylindrical hub 40a, a inwardly tapered forwardly extending section 40b having an outwardly extending radial flange 40c adjacent a downstream end thereof, and a forwardly extending relatively small diameter nose 40d. (Fig. 4) The spray tips 40 each have an upstream smaller diameter annular hub 40e positioned in the spray tip receiving opening 44 of the nozzle liquid manifold 41 with a sealing O-ring 48 interposed therebetween (Fig. 2). The spray tips 40 each have a relatively large diameter inlet passage section 49 that communicates with an inwardly converging conical passage section 49a, which in turn communicates with a relatively small diameter liquid passage 49b extending through the nose 40d that defines a relatively small discharge orifice 49c, such as on the order of 10 mm (0.040 inches). (Fig. 3) The spray tip inlet passage sections 49 of each of the spray tips communicate with respective one of the outwardly converging liquid flow passages 42 in the nozzle liquid manifold 41.

The radial flange 40c of each spray tip 40 is each mounted within a respective one of the cylindrical openings 46 of the nozzle cap 45 with an annular plastic air cap 50 disposed about the spray tip radial flange 40c in interposed sealing engagement between the radial flange 40c and nozzle cap opening 46. The plastic air cap 50 in this case has an L-shape cross section periphery disposed about the front and outer peripheries of each spray tip radial flange 40c with a forwardly extending lip 50a mounted in overlying relation to an annular lip of the nozzle cap opening 46. (Fig. 3) The nozzle cap 45 is secured to the nozzle liquid manifold 41 by a nylon or like non-metallic retaining screw 52 extending centrally through the nozzle cap 45 into threaded engagement with an axial opening 41a of the nozzle liquid manifold 41 for securing the spray tips 40 and plastic air caps 50 in assembled relation.

For atomizing liquid discharging from the spray tips 40, the nozzle liquid manifold 41 and nozzle cap 45 define an annular atomizing gas passageway 55 (Fig. 2) that communicates between the annular gas passageway 25 between the metallic liquid feed tube 18 and outer nozzle body member 15 and an annular gas passage 56 about each spray tip 40 via a respective right angle inlet passage 58. Pressurized atomizing gas thereby can be simultaneously directed about the plurality of spray tips 40, through circumferential air passage openings 40d in the respective spray tip radial flanges 40c, and axially outwardly into interacting atomizing engagement with liquid discharging from the plurality of spray tip discharge orifices 49c. (Fig. 3)

In carrying a further feature of this embodiment, liquid directed through the cluster head spray nozzle assembly 14 is subjected to multistage electrostatic charging for enhanced liquid atomization upon discharge from the spray nozzle assembly. To this end, a downstream end of the metallic electrically charged liquid feed tube 18 has a sharp chamfered end 60, preferably charged to about 30 kv, that first focuses an electrostatic field into the feed stock as it is discharged from the feed tube 18 and prior to entry into the spray tips 40, and secondly, the gap between the sharp chamfered end 60 of the charged liquid feed tube 18 and the spray tips 40 creates a capacitance within the gap that has unexpectedly been found to increase the electrostatic charge on the liquid as it is directed to and through the spray tips 40.

In operation, the cluster head spray nozzle assembly 14 has proven to produce quality fine liquid particle spraying optimum for spray drying applications at relatively high liquid flow rates up to 125 kg/hr. Yet the spray tips 40 each have relatively small discharge orifices 49c for enabling low pressure, controllable operation, using peristaltic pumps favored in spray drying applications. The cluster head spray nozzle assembly 14, furthermore, can deliver such high flow rate spraying in much shorter length, such as three to 1.52 m (five feet), and hence, in more economical spray drying chambers then hereto for possible when utilizing spray nozzle with larger discharge orifices and liquid pressures to increase flow rate. The multiple electrostatically charged spray patterns discharging from the cluster head spray nozzle assembly in the same chamber further has been found to cause particles to reattach to one another after they have dried, thereby reducing the amount of particles that are too fine to control which can hinder coating efficiency. Finally, it can be seen that all of the internal components of the electrostatic sprayer that are subject to contact by the liquid being sprayed are made of Teflon or stainless steel which are resistant to most liquids to be sprayed. The outer cylindrical body member 15, which preferably is made of a harder polyetherimide material that can be subject to degradation from certain solvents used in spray drying, is maintained out of contact from the liquid feed stock.

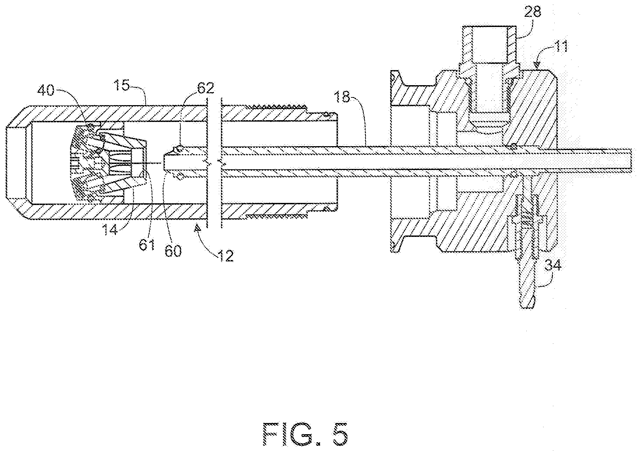

To facilitate economical manufacture of the electrostatic sprayer 10, it will be appreciated that the cluster head spray nozzle assembly 14 may be preassembled for efficient mounting in the nozzle body 12. The spray nozzle assembly 14 in preassembled condition in this instance can be assembled in cylindrical body member 15 by positioning into the cylindrical body member 15 from an upstream end, as depicted in Fig. 5. The downstream end of the illustrated cylindrical body member 15 is formed with an annular smaller diameter lip 59 for supporting the other periphery of the nozzle cap 45 with a sealing O-ring 63 between the nozzle cap 45 and cylindrical body member 15. The liquid feed tube 18 can thereupon be inserted into a central opening 61 of the nozzle liquid manifold 41 with an interposed annular O-ring 62 therebetween. While the illustrated spray nozzle assembly 14 has six spray tips, depending upon the size of the nozzle liquid manifold, other numbers of spray tips, preferably between about three and eight, could be used.

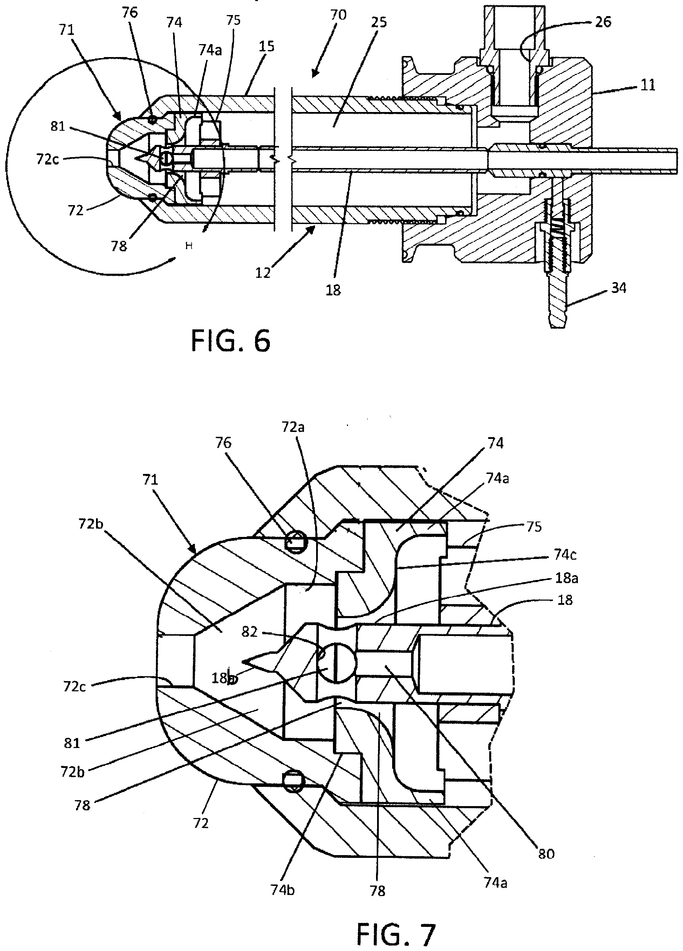

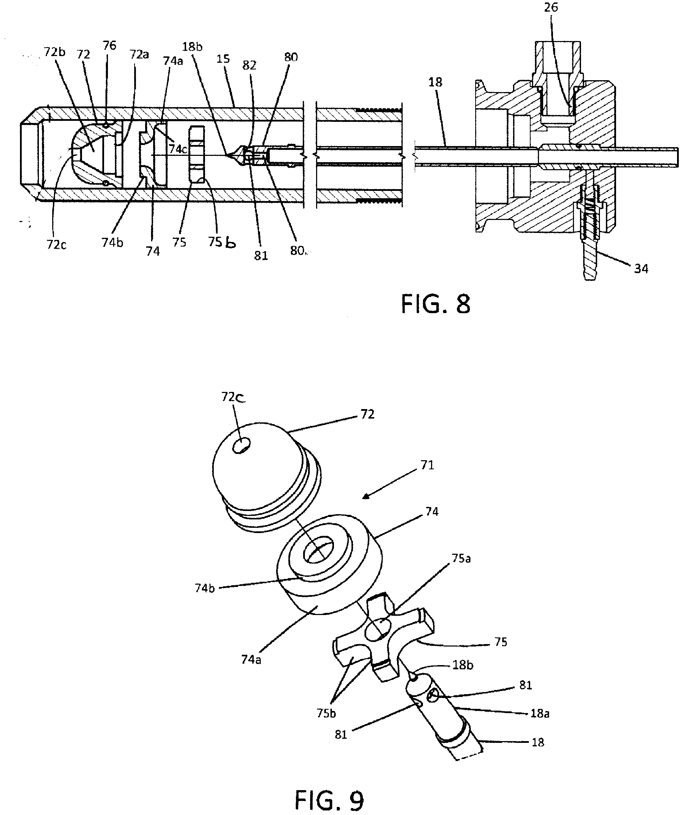

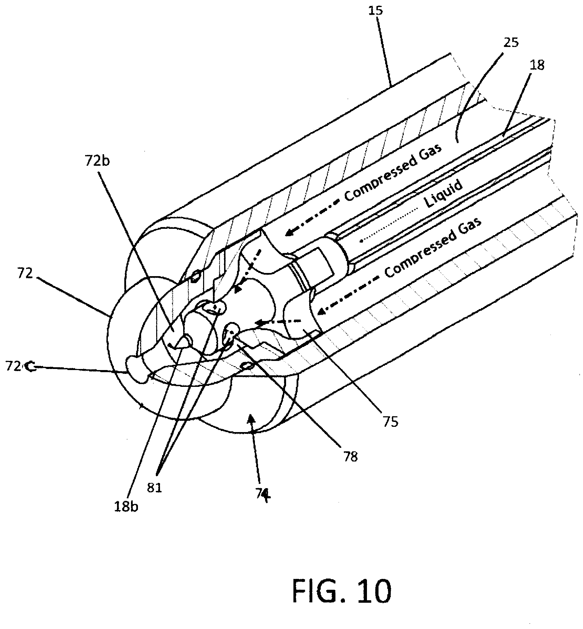

Referring now more particularly to Figs 6-10, there is shown an electrostatic sprayer 70 having another electrostatic spray nozzle assembly 71, this electrostatic sprayer not being according to the claimed invention, wherein items similar to those described above have been given similar reference numerals. The electrostatic sprayer 70 includes an input head 11 with liquid feed tube 18, a pressurized gas inlet 26, and high voltage cable connection 34 similar to that described above. The sprayer 70 further includes an elongated nozzle body 12 fixed to the input head 11 with the electrically chargeable liquid feed tube 18 centrally disposed therein.

In carrying out this variant the electrostatic spray nozzle assembly 71 is an internal mix spray nozzle assembly operable for directing a fine liquid particle spray for optimum usage in spray drying. The illustrated spray nozzle assembly 71 basically comprises a dome configured spray tip 72, an inner air guide 74 mounted directly upstream of the spray tip 72, and a center locator 75 for supporting the downstream end of the liquid feed tube 18 centrally within the air guide 74 and spray tip 72.

The illustrated dome configured spray tip 72 has an upstream cylindrical passage section 72a that communicates with an inwardly converging mixing chamber 72b, which in turn communicates through a smaller diameter cylindrical passage section that defines a spray discharge orifice 72c. The spray tip 72 has an outwardly extending radial flange supported against a reduced diameter annular retention lip of the outer cylindrical nozzle body member15. A sealing O-ring 76 is interposed between the dome of the spray tip 72 and an inner annular side of retaining lip of the cylindrical body member 15.

The air guide 74 has an outer cylindrical wall section 74a mounted within the cylindrical body member 15 and a forwardly extending annular hub 74b concentrically mounted within an annular counterbore of the spray tip 71. The center locator 75 has a central opening 75a in which a liquid feed tube 18 extends and is supported in a plurality of radial support legs 75b. The radial legs 75b in this case are supported adjacent their downstream ends within the cylindrical wall 74a of the air guide 74. The air guide 74 has an inwardly curved internal wall 74c for channeling and converging pressurized atomizing gas from the annular gas passage 25 through a small annular gas passage 78 surrounding the liquid feed tube 18.

In further carrying out this variant, the liquid feed tube 18 includes an end segment section 18a axially coupled thereto formed with a reduced diameter liquid passage section 80 that communicates with a plurality of cross slots 81 for directing pressurized liquid flow streams radially outwardly of the liquid feed tube 18 for interaction and atomization by pressurized atomizing gas directed through the narrow annular air passage 78 directly across the cross slots 81. In this instance there are four circumferentially spaced cross slots 81 which define an impingement surface 82 at the end of the feed tube segment 18a against which liquid directed through the liquid feed tube 18 impinges and is forcefully directed out radially outwardly for interaction with the pressurized atomizing gas. It will be understood that the extension segment 18a of the liquid feed tube 18 also is made of an electrically conductive metallic material and is fixed in electrically contacting relation to the liquid feed tube 18.

In keeping with a further important feature of this variant, the liquid feed tube end segment 18a has a sharp pointed end 18b disposed within the mixing chamber 72b of the spray tip 72 for focusing an electrostatic field therefrom in a manner that enhances electrostatic charging and atomization of the liquid particles within the spray tip mixing chamber 72b prior to discharge from the spray nozzle assembly 71. The terminal pointed end 18b of the feed tube 18 is located centrally within the spray tip mixing chamber 72b for focusing the electrostatic field into the atomized liquid particles as they converge and exit the discharge passage 72c.

In operation, the electrostatic sprayer 70 is operable for efficiently producing quality fine liquid particle atomized spray at high liquid feed stock rates up to 125 kg/hr with less pressurized atomizing gas requirements, which is particularly advantageous when using non-air atomizing gas, such as hydrogen gas commonly used in spray drying. Nitrogen is used to protect against a dust explosion, which is a higher risk with electrostatic spraying, also has the ability to absorb large amounts of moisture. Like in the previous embodiment, liquid is charged as it is directed through the metal liquid supply tube 18 simultaneous with the direction of pressurized gas through the annular chamber 25 surrounding the liquid supply tube 18. In this instance, the liquid breaks up in multiple stages, first by impinging upon the impingement surface 82 at the downstream end of the liquid supply tube segment 18a and transverse direction through the radial discharge passages 81 for interaction with pressurized atomizing gas directed across radial liquid discharge passages 81. The atomized liquid is then directed by the atomizing gas into the downstream mixing chamber 72b of the spray tip 72 where fine liquid particles are further charged by the focused electrostatic fields promulgated by the sharp pointed end 18b liquid feed of tube segment 18a for further enhanced atomization prior to discharge from the exit orifice 72c as a very fine liquid particle spray for efficient spray drying.

## Claims

1. An electrostatic sprayer comprising:
a high voltage input head (11);
an elongated nozzle body (12) supported in downstream relation to said input head (11);
a liquid feed tube (18) made of electrically conductive material disposed within said nozzle body (12) and extending in downstream relation to said input head (11); said liquid feed tube (18) being connectable to a pressurized liquid supply for directing liquid through said feed tube (18);
said nozzle body (12) and liquid feed tube (18) defining an annular atomizing gas passage (25) within said nozzle body (12);
said input head (11) having a high voltage cable (34) in electrical contact with said liquid feed tube (18) and for connection to a high voltage electrical source for electrically charging said liquid feed tube (18) and liquid directed through said feed tube (18);
said input head (11) having a pressurized gas inlet (26) in communication with said annular atomizing gas passage (25) and for connection to a pressurized atomizing gas supply for directing pressurized atomizing gas through said annular atomizing gas passage (25) **characterized by**:
an external mix cluster head spray nozzle assembly (14) mounted at a downstream end of said elongated nozzle body (12), said external mix cluster head spray nozzle assembly (14) including a cluster head body (39);
said external mix cluster head spray nozzle assembly (14) having a plurality of circumferentially space spray tips (40) each disposed in a respective spray tip receiving opening (44) of said cluster head body (39);
said spray tips (40) each having a liquid flow passage (49) with an upstream end communicating with said liquid feed tube (18) for receiving electrically charged liquid from said feed tube (18) and a downstream discharge orifice (49c) for discharging a liquid spray from said cluster head spray nozzle assembly; and
said cluster head body (39) defining an air passage (56) about each spray tip (40) that communicates with said annular atomizing gas passage (25) for directing atomizing gas about said spray tip discharge orifice (49c) for atomizing liquid discharging from each spray tip (40) external to said cluster head body (39).

2. The electrostatic sprayer of claim 1 in which said elongated nozzle body (12) and said cluster head body (39) are made of a non-electrically conductive material.

3. The electrostatic sprayer of claim 1 in which said spray tips (40) each are made of electrically conductive material and are disposed in downstream spaced relation to said electrically charged liquid feed tube (18) such that an electrical capacitance is formed between said electrically charged liquid feed tube (18) and each spray tips (40) that enhances electrostatic charging of liquid directed to said spray tips (40).

4. The electrostatic sprayer of claim 1 in which said spray tips (40) are oriented in said cluster head body (39) in a downstream direction outwardly with respect to a central axis of the cluster head body (39).

5. The electrostatic sprayer of claim 1 in which cluster head body (39) includes a central liquid manifold (41) and a nozzle cap (45) disposed in surrounding relation to a downstream end of said liquid manifold (41), said liquid manifold (41) being formed with a plurality of circumferentially spaced liquid passages (42) each communicating between said electrically charged liquid feed tube (18) and a respective one of the spray tips (40), said nozzle cap (45) being formed with a plurality of circumferentially spaced openings (46) each disposed in surrounding relation to a respective one of the spray tips (40) and communicating with said annular atomizing gas passage (25) for directing atomizing gas from said annular atomizing gas passage (25) about each respective spray tip (40) for atomizing liquid discharging from the spray tip (40).

6. The electrostatic sprayer of claim 5 in which said spray tips (40) each have an outwardly extending radial flange (40c) formed with gas passageways (40d) for supporting the spray tip (40) in a respective one of the circumferentially spaced nozzle cap openings (46) while permitting the flow of atomizing gas through the radial flange (40c) for atomizing liquid discharging from the spray tip (40).

7. The electrostatic sprayer of claim 6 in which said spray tips (40) each have a cylindrical hub (40a), an inwardly tapered forward section (40b), and a relatively smaller diameter forward nose (40d) that defines the spray tip discharge orifice (40c).

8. The electrostatic sprayer of claim 6 including a nonmetallic sealing cap (50) interposed between the radial flange (40c) of each spray tip (40) and the nozzle cap opening (46) within which the spray tip (40) is mounted.

9. The electrostatic sprayer of claim 5 in which said liquid manifold (41) has a frustoconical shape expanding outwardly in a downstream direction.

10. The electrostatic sprayer of claim 1 in which said elongated nozzle body (12) is formed with a downstream inwardly directed lip (59), and said cluster head body (39) is mounted within said elongated nozzle body (12) in engaging relation to said annular lip (59).

11. The electrostatic sprayer of claim 1 including a peristaltic pump for directing liquid from a liquid supply through said electrically charged liquid feed tube (18).

## Patentansprüche

1. Elektrostatisches Sprühgerät, Folgendes umfassend:
einen Hochspannungseingangskopf (11);
einen länglichen Düsenkörper (12), der in Bezug auf den Eingangskopf (11) stromabwärts abgestützt ist;
ein Flüssigkeitszufuhrrohr (18) aus elektrisch leitendem Material, das innerhalb des Düsenkörpers (12) angeordnet ist und sich in Bezug auf den Eingangskopf (11) stromabwärts erstreckt; wobei das Flüssigkeitszufuhrrohr (18) mit einer Druckflüssigkeitsversorgung verbindbar ist, um Flüssigkeit durch das Zufuhrrohr (18) zu leiten;
wobei der Düsenkörper (12) und das Flüssigkeitszufuhrrohr (18) einen ringförmigen Zerstäubergaskanal (25) innerhalb des Düsenkörpers (12) definieren;
wobei der Eingangskopf (11) ein Hochspannungskabel (34) aufweist, das mit dem Flüssigkeitszufuhrrohr (18) in elektrischem Kontakt steht, und zur Verbindung mit einer elektrischen Hochspannungsquelle zum elektrischen Aufladen des Flüssigkeitszufuhrrohrs (18) und der durch das Zufuhrrohr (18) geleiteten Flüssigkeit;
wobei der Eingangskopf (11) einen Druckgaseinlass (26) aufweist, der mit dem ringförmigen Zerstäubergaskanal (25) in Kommunikation steht, und zur Verbindung mit einer Druckzerstäubergasversorgung, um Druckzerstäubergas durch den ringförmigen Zerstäubergaskanal (25) zu leiten, **gekennzeichnet durch**:
eine externe Mischerbündelkopf-Sprühdüsenanordnung (14), die an einem stromabwärtigen Ende des länglichen Düsenkörpers (12) montiert ist, wobei die externe Mischerbündelkopf-Sprühdüsenanordnung (14) einen Bündelkopfkörper (39) beinhaltet;
wobei die externe Mischerbündelkopf-Sprühdüsenanordnung (14) eine Vielzahl von in Umfangsrichtung beabstandeten Sprühspitzen (40) aufweist, die jeweils in einer jeweiligen Sprühspitzenaufnahmeöffnung (44) des Bündelkopfkörpers (39) angeordnet sind;
wobei die Sprühspitzen (40) jeweils einen Flüssigkeitsstromkanal (49) mit einem stromaufwärtigen Ende, das zum Aufnehmen von elektrisch aufgeladener Flüssigkeit aus dem Zufuhrrohr (18) mit dem Flüssigkeitszufuhrrohr (18) kommuniziert, und eine stromabwärtige Abgabeöffnung (49c) zum Abgeben eines Flüssigkeitssprays aus der Bündelkopf-Sprühdüsenanordnung, aufweisen; und
wobei der Bündelkopfkörper (39) um jede Sprühspitze (40) einen Luftkanal (56) definiert, der mit dem ringförmigen Zerstäubergaskanal (25) kommuniziert, um Zerstäubergas um die Sprühspitzenabgabeöffnung (49c) zum Zerstäuben von Flüssigkeit zu leiten, die von jeder Sprühspitze (40) außerhalb des Bündelkopfkörpers (39) abgegeben wird.

2. Elektrostatisches Sprühgerät nach Anspruch 1, wobei der längliche Düsenkörper (12) und der Bündelkopfkörper (39) aus einem nicht elektrisch leitenden Material bestehen.

3. Elektrostatisches Sprühgerät nach Anspruch 1, wobei die Sprühspitzen (40) jeweils aus elektrisch leitendem Material bestehen und in Bezug zu dem elektrisch aufgeladenen Flüssigkeitszufuhrrohr (18) stromabwärts beabstandet angeordnet sind, sodass zwischen dem elektrisch aufgeladenen Flüssigkeitszufuhrrohr (18) und jeder Sprühspitze (40) eine elektrische Kapazität gebildet wird, die die elektrostatische Aufladung von Flüssigkeit, die zu den Sprühspitzen (40) geleitet wird, erhöht.

4. Elektrostatisches Sprühgerät nach Anspruch 1, wobei die Sprühspitzen (40) in dem Bündelkopfkörper (39) in Bezug auf eine Mittelachse des Bündelkopfkörpers (39) in einer stromabwärtigen Richtung nach außen ausgerichtet sind.

5. Elektrostatisches Sprühgerät nach Anspruch 1, wobei der Bündelkopfkörper (39) einen zentralen Flüssigkeitsverteiler (41) und eine Düsenkappe (45) beinhaltet, die in umgebender Beziehung zu einem stromabwärtigen Ende des Flüssigkeitsverteilers (41) angeordnet sind, wobei der Flüssigkeitsverteiler (41) mit einer Vielzahl von in Umfangsrichtung beabstandeten Flüssigkeitskanälen (42) ausgebildet ist, die jeweils zwischen dem elektrisch aufgeladenen Flüssigkeitszufuhrrohr (18) und einer jeweiligen der Sprühspitzen (40) kommunizieren, wobei die Düsenkappe (45) mit einer Vielzahl von in Umfangsrichtung beabstandeten Öffnungen (46) ausgebildet ist, die jeweils in umgebender Beziehung zu einer jeweiligen der Sprühspitzen (40) angeordnet sind und mit dem ringförmigen Zerstäubergaskanal (25) kommunizieren, um Zerstäubergas aus dem ringförmigen Zerstäubergaskanal (25) um jede jeweilige Sprühspitze (40) zu leiten, um Flüssigkeit, die von der Sprühspitze (40) abgegeben wird, zu zerstäuben.

6. Elektrostatisches Sprühgerät nach Anspruch 5, wobei die Sprühspitzen (40) jeweils einen sich nach außen erstreckenden Radialflansch (40c) aufweisen, der mit Gasdurchlässen (40d) ausgebildet ist, um die Sprühspitze (40) in einer jeweiligen der in Umfangsrichtung beabstandeten Düsenkappenöffnungen (46) abzustützen, während der Strom von Zerstäubergas durch den Radialflansch (40c) ermöglicht wird, um Flüssigkeit, die von der Sprühspitze (40) abgegeben wird, zu zerstäuben.

7. Elektrostatisches Sprühgerät nach Anspruch 6, wobei die Sprühspitzen (40) jeweils eine zylindrische Nabe (40a), einen sich nach innen verjüngenden vorderen Abschnitt (40b) und eine vordere Nase (40d) mit relativ kleinerem Durchmesser, die die Sprühspitzenabgabeöffnung (40c) definiert, aufweisen.

8. Elektrostatisches Sprühgerät nach Anspruch 6, beinhaltend eine nichtmetallische Dichtungskappe (50), die zwischen dem radialen Flansch (40c) jeder Sprühspitze (40) und der Düsenkappenöffnung (46), in der die Sprühspitze (40) montiert ist, eingefügt ist.

9. Elektrostatisches Sprühgerät nach Anspruch 5, wobei der Flüssigkeitsverteiler (41) eine kegelstumpfförmige Form aufweist, die sich in stromabwärtiger Richtung nach außen erweitert.

10. Elektrostatisches Sprühgerät nach Anspruch 1, wobei der längliche Düsenkörper (12) mit einer stromabwärts nach innen gerichteten Lippe (59) ausgebildet ist und der Bündelkopfkörper (39) in dem länglichen Düsenkörper (12) in eingreifender Beziehung zu der ringförmigen Lippe (59) montiert ist.

11. Elektrostatisches Sprühgerät nach Anspruch 1, beinhaltend eine Peristaltikpumpe zum Leiten von Flüssigkeit aus einer Flüssigkeitsversorgung durch das elektrisch aufgeladene Flüssigkeitszufuhrrohr (18).

## Revendications

1. Pulvérisateur électrostatique comprenant :
une tête d'entrée haute tension (11) ;
un corps de buse allongé (12) supporté en aval par rapport à ladite tête d'entrée (11) ;
un tube d'alimentation en liquide (18) constitué d'un matériau conducteur d'électricité disposé à l'intérieur dudit corps de buse (12) et s'étendant en aval par rapport à ladite tête d'entrée (11) ; ledit tube d'alimentation en liquide (18) pouvant être connecté à une alimentation en liquide sous pression pour diriger le liquide à travers ledit tube d'alimentation (18) ;
ledit corps de buse (12) et le tube d'alimentation en liquide (18) définissant un conduit annulaire de gaz d'atomisation (25) à l'intérieur dudit corps de buse (12) ;
ladite tête d'entrée (11) présentant un câble haute tension (34) en contact électrique avec ledit tube d'alimentation en liquide (18) et destiné à être connecté à une source électrique haute tension pour charger en électricité ledit tube d'alimentation en liquide (18) et le liquide dirigé à travers ledit tube d'alimentation (18) ;
ladite tête d'entrée (11) ayant une arrivée de gaz sous pression (26) en communication avec ledit conduit annulaire de gaz d'atomisation (25) et destinée à être connectée à une alimentation en gaz d'atomisation sous pression pour diriger le gaz d'atomisation sous pression à travers ledit conduit annulaire de gaz d'atomisation (25), **caractérisé par** :
un ensemble de buses de pulvérisation à tête de grappe de mélange externe (14) monté sur une extrémité en aval dudit corps de buse allongé (12), ledit ensemble de buses de pulvérisation à tête de grappe de mélange externe (14) comportant un corps de tête de grappe (39) ;
ledit ensemble de buses de pulvérisation à tête de grappe de mélange externe (14) ayant une pluralité d'embouts de pulvérisation espacés sur la circonférence (40), chacun disposé dans une ouverture de réception d'embouts de pulvérisation respective (44) dudit corps de tête de grappe (39) ;
lesdits embouts de pulvérisation (40) ayant chacun un conduit d'écoulement de liquide (49) avec une extrémité en amont communiquant avec ledit tube d'alimentation en liquide (18) pour recevoir un liquide chargé en électricité dudit tube d'alimentation (18) et un orifice d'évacuation en aval (49c) pour évacuer une pulvérisation de liquide provenant dudit ensemble de buses de pulvérisation à tête de grappe ; et
ledit corps de tête de grappe (39) définissant un conduit d'air (56) autour de chaque embout de pulvérisation (40) qui communique avec ledit conduit annulaire de gaz d'atomisation (25) pour diriger le gaz d'atomisation autour dudit orifice d'évacuation d'embout de pulvérisation (49c) pour évacuer le liquide d'atomisation depuis chaque embout de pulvérisation (40) externe audit corps de tête de grappe (39).

2. Pulvérisateur électrostatique selon la revendication 1, dans lequel ledit corps de buse allongé (12) et ledit corps de tête de grappe (39) sont constitués d'un matériau non conducteur d'électricité.

3. Pulvérisateur électrostatique selon la revendication 1, dans lequel lesdits embouts de pulvérisation (40) sont chacun constitués d'un matériau conducteur d'électricité et sont disposés en aval et à distance dudit tube d'alimentation en liquide chargé en électricité (18) de telle sorte qu'une capacité électrique est formée entre ledit tube d'alimentation en liquide chargé d'électricité (18) et chaque embout de pulvérisation (40) qui améliore la charge électrostatique du liquide dirigé vers lesdits embouts de pulvérisation (40).

4. Pulvérisateur électrostatique selon la revendication 1, dans lequel lesdits embouts de pulvérisation (40) sont orientés dans ledit corps de tête de grappe (39) dans une direction en aval vers l'extérieur par rapport à un axe central du corps de tête de grappe (39).

5. Pulvérisateur électrostatique selon la revendication 1, dans lequel le corps de tête de grappe (39) comporte un collecteur de liquide central (41) et un capuchon de buse (45) disposés en périphérie d'une extrémité en aval dudit collecteur de liquide (41), ledit collecteur de liquide (41) étant formé d'une pluralité de conduits de liquide (42) espacés sur la circonférence, chacun communiquant entre ledit tube d'alimentation en liquide chargé d'électricité (18) et l'un respectif des embouts de pulvérisation (40), ledit capuchon de buse (45) étant formé avec une pluralité d'ouvertures espacées sur la circonférence (46), chacune disposée en périphérie de l'un respectif des embouts de pulvérisation (40) et communiquant avec ledit conduit annulaire de gaz d'atomisation (25) pour diriger le gaz d'atomisation dudit conduit annulaire de gaz d'atomisation (25) à proximité de chaque embout de pulvérisation respectif (40) pour évacuer le liquide d'atomisation depuis l'embout de pulvérisation (40).

6. Pulvérisateur électrostatique selon la revendication 5, dans lequel lesdits embouts de pulvérisation (40) ont chacun une bride radiale s'étendant vers l'extérieur (40c) formée à partir de conduites de gaz (40d) pour supporter l'embout de pulvérisation (40) dans l'une respective des ouvertures de capuchons de buse espacées sur la circonférence (46) tout en permettant l'écoulement du gaz d'atomisation à travers la bride radiale (40c) pour évacuer le liquide d'atomisation depuis l'embout de pulvérisation (40).

7. Pulvérisateur électrostatique selon la revendication 6, dans lequel lesdits embouts de pulvérisation (40) ont chacun un moyeu cylindrique (40a), une section avant effilée vers l'intérieur (40b) et un nez avant de diamètre relativement plus petit (40d) qui définit l'orifice d'évacuation de l'embout de pulvérisation (40c) .

8. Pulvérisateur électrostatique selon la revendication 6, comportant un capuchon d'étanchéité non métallique (50) interposé entre la bride radiale (40c) de chaque embout de pulvérisation (40) et l'ouverture de capuchon de buse (46) à l'intérieur de laquelle l'embout de pulvérisation (40) est monté.

9. Pulvérisateur électrostatique selon la revendication 5, dans lequel ledit collecteur de liquide (41) a une forme tronconique s'étendant vers l'extérieur dans une direction en aval.

10. Pulvérisateur électrostatique selon la revendication 1, dans lequel ledit corps de buse allongé (12) est formé avec une lèvre dirigée vers l'intérieur en aval (59), et ledit corps de tête en grappe (39) est monté à l'intérieur dudit corps de buse allongé (12) en prise avec ladite lèvre annulaire (59).

11. Pulvérisateur électrostatique selon la revendication 1, comportant une pompe péristaltique pour diriger le liquide provenant d'une alimentation en liquide à travers ledit tube d'alimentation en liquide chargé en électricité (18).
